# EUROPÄISCHE PATENTSCHRIFT

(11) **EP 3 028 333 B1**
(45) Veröffentlichungstag und Bekanntmachung des Hinweises auf die Patenterteilung: **04.04.2018**
(21) Anmeldenummer: 14757839.7
(22) Anmeldetag: 28.07.2014
(51) Int. Cl.: H01M 8/16, H01M 4/90, C02F 3/00

(54) **FILTRATIONSAKTIVE BRENNSTOFFZELLE**
FILTRATION-ACTIVE FUEL CELL
PILE À COMBUSTIBLE À FILTRATION ACTIVE

(30) Priorität: 30.07.2013 DE 102013012663
(43) Veröffentlichungstag der Anmeldung: 08.06.2016
(73) Patentinhaber: Baden-Württemberg Stiftung gGmbH, 70174 Stuttgart (DE); Albert-Ludwigs-Universität Freiburg, 79085 Freiburg (DE)
(72) Erfinder: DANZER, Joana, 79108 Freiburg (DE); KERZENMACHER, Sven, 79108 Freiburg (DE)
(74) Vertreter: Müller-Boré & Partner Patentanwälte PartG mbB
(86) Internationale Anmeldenummer: PCT/EP2014/002059
(87) Internationale Veröffentlichungsnummer: WO 2015/014474

(56) Entgegenhaltungen:
- CN-A- 102 381 753
- KR-A- 20130 050 577
- US-A1- 2007 259 217

## Beschreibung

Die vorliegende Erfindung betrifft eine filtrationsaktive Brennstoffzelle sowie deren Verwendung in der Behandlung und Aufbereitung von Fluiden, insbesondere von Flüssigkeiten. Insbesondere betrifft die vorliegende Erfindung eine filtrationsaktive Brennstoffzelle, in welcher die filtrationsaktive Schicht eines Membranfilters zur Behandlung und Aufbereitung von Fluiden, insbesondere von Flüssigkeiten, gleichzeitig als Anode einer Brennstoffzelle genutzt wird.

Die Membranfiltration zählt zu den wichtigsten Methoden der Stofftrennung, wobei verschiedene Membranverfahren zur Verfügung stehen. Diese werden grundsätzlich nach ihrem Rückhaltevermögen und der aufzuwendenden Triebkraft unterschieden. In Abhängigkeit von dem jeweiligen Einsatzgebiet finden im Bereich der Wasser- und Abwasseraufbereitung die Mikrofiltration (MF), die Ultrafiltration (UF), die Nanofiltration (NF) und die Umkehrosmose (RO) Anwendung, wobei diese Membranverfahren nach ihrem Rückhaltevermögen auf Grundlage der jeweiligen Porengröße bzw. des sog. Cut-Off-Wertes klassifiziert werden. Der Cut-Off-Wert oder auch "molecular weight cut-off" (MWCO) wird in der Membrantechnologie zur Kennzeichnung von Ultra- und Nanofiltrationsmembranen sowie der Umkehrosmose hinsichtlich ihres Rückhaltevermögens verwendet.

Auch wenn in der Literatur eine strikte Klassifizierung der verschiedenen Membranarten nicht existiert, werden auf dem Gebiet der Membrantechnologie Nanofiltrationsmembranen zwischen der Ultrafiltration und der Umkehrosmose angesiedelt. Eine grobe Klassifizierung der verschiedenen Membranarten kann wie folgt zusammengefasst werden. Mikrofiltrationsmembranen werden in der Regel anhand ihrer Porengröße klassifiziert, die etwa im Bereich von 0,1 bis 1 µm liegt. Ultrafiltrationsmembrane, die sowohl anhand ihrer Porengröße als auch MWCO-Wertes klassifiziert werden, weisen eine Porengröße von etwa 0,004 bis 0,1 µm bzw. einen MWCO von 2.000 bis 200.000 Daltons (Da) auf. Nanofiltrationsmembrane werden zur Rückhaltung von mehrfach geladenen Ionen und Molekülen im Molmassenbereich von etwa 200 bis 1000 Da verwendet und die Umkehrosmose dient zur Rückhaltung gelöster Stoffe kleiner 200 Da.

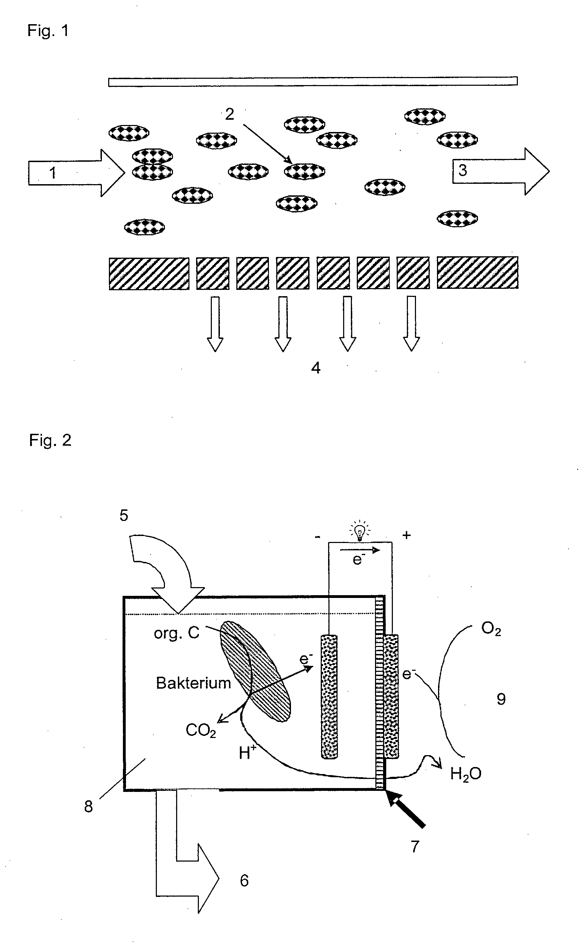

Die Membranfiltration, wie sie beispielhaft in Figur 1 dargestellt ist, ist eine Schlüsseltechnologie im Bereich der Wasser- und Abwasseraufbereitung, insbesondere für Anwendungen in denen das gereinigte Abwasser beispielsweise in einem Produktionsprozess wiederverwendet werden soll. Das Verfahren beruht auf der Kombination einer biologischen Reinigungsstufe, bei der die biologische Wasserverunreinigung mikrobiell aerob oder auch anaerob abgebaut wird, mit einer nachgeschalteten Membrantrennung, in der die bakterielle Biomasse vom gereinigten Abwasser getrennt und im Bioreaktor zurückgehalten wird. Solche Systeme werden auch als Membran-Bioreaktoren bzw. Membranbelebungsreaktoren (MBR) bezeichnet. Durch das hohe Rückhaltevermögen der Membranfiltration ergibt sich ein hohes Schlammalter und damit ein hochgradig gereinigtes Wasser, das weitgehend frei von Partikeln und Keimen ist. So lässt sich beispielsweise in einem industriellen Produktionsprozess ein komplett geschlossener Wasserkreislauf realisieren. In der industriellen Abwasserreinigung ist die MBR-Technologie dementsprechend eine viel genutzte Alternative zu herkömmlichen Reinigungsverfahren.

Der Nachteil dieses Abwasserreinigungsverfahrens liegt jedoch in den hohen Investitionskosten und im hohen spezifischen Energieverbrauch, der überwiegend durch die benötigte elektrische Pumpenenergie bestimmt wird. Entsprechend findet diese Technologie bislang vor allem dann Anwendung, wenn hohe Anforderungen an das gereinigte Abwasser gestellt werden oder wenn beispielsweise bei Platzmangel oder hohen Grundstückspreisen kompakte Wasserreinigungsanlagen notwendig sind. Beispiele hierfür sind die Behandlung von Abwässern der Pharma- und Lebensmittelindustrie, aber auch auf Hausmülldeponien oder Schiffen findet die MBR-Technologie Anwendung.

Grundsätzlich werden Membranfiltrationsprozesse bezüglich ihrer Betriebsart nach Dead-End- (statische Filtration) und Cross-Flow-Verfahren (Querstromfiltration) unterschieden. Das in Figur 1 dargestellte Schema einer Membranfiltration zeigt ein Cross-Flow-Verfahren, bei dem durch die kontinuierliche Überströmung der filtrationsaktiven Schicht senkrecht zum Permeatfluss eine Verblockung der Poren vermieden wird. Als Feed wird im Allgemeinen das aufzubereitende Stoffgemisch bezeichnet.

Als neues energieeffizientes Verfahren zur Abwasserreinigung werden aktuell mikrobielle Brennstoffzellen (MFC) erforscht, in denen exoelektrogene Bakterien statt mit Luftsauerstoff mit der Anode einer Brennstoffzelle "atmen", wie dies in Figur 2 skizziert ist. Mikrobielle Brennstoffzellen bestehen typischerweise aus zwei separaten Bereichen, dem Anoden- und dem Kathodenkompartiment, die durch eine elektrisch isolierende, aber für Ionen durchlässige Separatorstruktur, wie beispielsweise einer Protonen-Austausch-Membran (PEM), getrennt sind. Diese mikrobiellen Brennstoffzellen erlauben die Kombination der Abwasserreinigung mit gleichzeitiger Stromerzeugung, wobei an der Anode kohlenstoffhaltige organische Verbindungen durch den Stoffwechsel exoelektrogener Bakterien zu Kohlenstoffdioxid (CO₂) umgesetzt werden. Die dabei frei werdenden Elektronen werden auf die Anode übertragen und fließen unter Freisetzung elektrischer Energie durch einen äußeren Laststromkreis zur Kathode. Hier wird Luftsauerstoff aus der Gasphase als terminaler Elektronenakzeptor zusammen mit Protonen zu Wasser reduziert.

Der jetzige Stand der Technik erlaubt noch keine kommerzielle Verwertung dieser Technologie, da die erzielbaren Leistungsdichten noch keinen ökonomisch nachhaltigen Betrieb gewährleisten. Die Forschungstätigkeit fokussiert sich dementsprechend darauf, die Leistungsdichten zu erhöhen, die Kosten zu senken, biologische Brennstoffzellen in anderen Verfahren unterstützend einzusetzen oder gleichzeitig ein Produkt, wie beispielsweise Natronlauge, Wasserstoffperoxid, Ethanol, Wasserstoff, u.a. zu erzeugen (vgl. Hamelers H.V.M. et al. "New Applications and Performance of Bioelectrochemical Systems" Appl. Microbiol. Biotechnol., 85 (2010) 1673-1685).

Des Weiteren werden in aktuellen Untersuchungen verschiedene Elektrodenmaterialien untersucht, die die Effizienz der mikrobiellen Brennstoffzellen verbessern sollen. Hosseini G. et al. "A dual-chambered microbial fuel cell with Ti/nano-TiO2/P nano-structure cathode" J. Power Sources, 220 (2012) 292-297 beschreibt eine Ti/nano-TiO₂/Pd-nanostrukturierte Elektrode, die als Kathode in Kombination mit einer Graphitanode und einer ionenleitenden Membran in einer mikrobiellen Brennstoffzelle eingesetzt wird. Andererseits wird in Ozkaya B. et al. "Bioelectricity production using a new electrode in a microbial fuel cell" Bioprocess Biosyst. Eng., 35 (2012) 1219-1227 ebenfalls eine mikrobielle Brennstoffzelle beschrieben, bei der eine Ti-TiO₂ Elektrode als Anode eingesetzt wird.

Darüber hinaus wird in Pocaznoi D. et al. "Stainless steel is a promising electrode material for anodes of microbial fuel cells" Energy Environ. Sci., 5 (2012) 9645-9652 die Verwendung von rostfreiem Stahl als Anodenmaterial in einer mikrobiellen Brennstoffzelle beschrieben. Wei J. et al. "Recent Progress in Electrodes for Microbial Fuel Cells" Bioresour. Technol., 102 (2011) 9335-9344 untersucht die Verwendung von Kohlenstoffmaterialien in mikrobiellen Brennstoffzellen und Michaelidou U. et al. "Microbial Communities and Electrochemical Performance of Titanium-Based Anodic Electrodes in a Microbial Fuel Cell" Appl. and Environ. Microbiol., 77 (2011) 1069-1075 beschreibt die Verwendung von Anoden auf Titanbasis.

Um die Leistungsdichten zu erhöhen, zählt zu den aktuellen Herausforderungen der mikrobiellen Brennstoffzelle die Entwicklung sogenannter "luftatmender" Kathoden, mit denen Luftsauerstoff aus der Gasphase effizient und ohne den Einsatz von Hilfsenergie elektrochemisch umgesetzt werden kann. Kernstück einer luftatmenden Kathode ist die sogenannte Dreiphasengrenze zwischen Elektrode, Elektrolyt und Gasphase, an der die elektrochemische Reaktion stattfindet. Als besonders nachteilig beim Einsatz luftatmender Kathoden in mikrobiellen Brennstoffzellen hat sich die Bildung von Salzablagerungen aus den im Abwasser gelösten Salzen herausgestellt. Solche Ablagerungen blockieren die Transportwege und Reaktionsoberfläche der Kathode und führen zu einem raschen Leistungsverlust. Darüber hinaus bildet sich im Betrieb der Brennstoffzelle ein pH-Gradient zwischen Anode und Kathode aus, der ebenfalls die Leistungsfähigkeit des Systems beeinträchtigt (vgl. Popat S.C. et al. "Importance of OH-Transport From Cathodes in Microbial Fuel Cells" Chemsuschem, 5 (2012) 1071-1079).

Der Bildung einer Salzkruste und eines pH-Gradienten kann grundsätzlich durch eine kontinuierliche Berieselung der Kathodenoberfläche entgegengetreten werden, wie in Aelterman P. et al. "Microbial Fuel Cells Operated With Iron-Chelated Air Cathodes" Electrochim. Acta, 54 (2009) 5754-5760 beschrieben. Dies ist jedoch nachteiligerweise mit zusätzlichem apparativem und energetischem Aufwand verbunden.
Im Stand der Technik wurde zuletzt durch Kombination der MBR-Technologie mit mikrobiellen Brennstoffzellen versucht, dem vorstehend beschriebenen Nachteil der Membranfiltration in der Wasser- und Abwasseraufbereitung, d.h. der hohe spezifische Energieverbrauch der MBR-Technologie, entgegenzutreten. Dadurch soll ein Teil der zum Betrieb eines Membranbioreaktors notwendigen elektrischen Energie direkt aus der organischen Belastung des zu behandelnden Abwassers gewonnen werden. Insgesamt soll so die Energieeffizienz des Membranverfahrens erhöht und die Betriebskosten gesenkt werden, sodass die Membranfiltration in einem breiteren Einsatzbereich wirtschaftlich werden könnte.
Beispielsweise wird in Logan B.E. "Microbial fuel cells", John Wiley & Sons, Inc., Hoboken, New Jersey, 2008 und in Logan B.E. et al. "Microbial Fuel Cells: Methodology and Technology", Environ. Sci. Technol., 40 (2006) 5181-5192 die Kombination eines MBR mit einem MFC-Reaktor beschrieben. Hierbei wird die MBR-Technologie mit einer MFC derart gekoppelt, dass beide Reaktoren in Serie geschaltet sind. Es handelt sich somit nicht um ein integriertes System beider Technologien im eigentlichen Sinn. In ähnlicher Weise wird in Wang Y.-P. et al. "A microbial fuel cell-membrane bioreactor integrated system for cost-effective wastewater treatment" Appl. Energy, 98 (2012) 230-235 von einem integrierten System berichtet, obwohl aufgrund der Serienschaltung der einzelnen Reaktoren kein eigentliches integriertes System vorliegt.

Ein Nachteil dieser im Stand der Technik bekannten Technologie, bei der die jeweiligen Reaktoren in Serie geschaltet sind, ist jedoch weiterhin, dass das komplexe Reaktorsystem mit hohen Investitionskosten und einem hohen apparativen Aufwand verbunden ist.

In der chinesischen Patentanmeldung CN 102 616 918 A wird ein direkt gekoppelter MBR-MFC-Reaktor zur Abwasserreinigung beschrieben, bei welchem ein Biofilm an der Kathode gebildet ist. Dadurch kann die Kathode der MFC gleichzeitig als filtrationsaktive Schicht des MBR verwendet werden. Ein vergleichbares Prinzip wird in der chinesischen Patentanmeldung CN 102381753 A und in Liu J. et al. "Integration of Bio-Electrochemical Cell in Membrane Bioreactor for Membrane Cathode Fouling Reduction Through Electricity Generation" J. Membr. Sci., 430 (2013) 196-202 beschrieben. Auch in Wang Y.-K. et al. "Development of a Novel Bioelectrochemical Membrane Reactor for Wastewater Treatment" Environ. Sci. Techn. 45 (2011) 9256-9261 wird ein Netz aus nichtrostendem Stahl mit einem darauf gebildeten Biofilm offenbart, das sowohl als Kathode der MFC als auch als filtrationsaktive Schicht des MBR dient. Hierbei wird der Membranfiltrationsprozess im Dead-End-Betrieb durchgeführt.

Bei diesen Vorrichtungen, bei welchen die Kathode der MFC gleichzeitig als filtrationsaktive Schicht des MBR verwendet wird, siedeln sich an der Kathode Bakterien an, die als Katalysator für die Sauerstoffreduktion fungieren. Der zugrunde liegende Mechanismus der Energieerzeugung dieser Systeme ist jedoch nur unvollständig verstanden (vgl. Harnisch F. et al. "From MFC to MXC: Chemical and Biological Cathodes and Their Potential for Microbial Bioelectrochemical Systems" Chem. Soc. Rev., 39 (2010) 4433-4448).

Ausgehend hiervon liegt der vorliegenden Erfindung die Aufgabe zugrunde, ein Filtrationssystem zur Behandlung und Aufbereitung von Fluiden, insbesondere von Flüssigkeiten, bereitzustellen, welches die bekannten Nachteile und Einschränkungen des Stands der Technik überwindet. Insbesondere ist es eine Aufgabe der vorliegenden Erfindung, eine leistungsstarke Filtrationsvorrichtung bereitzustellen, die ohne großen apparativen und energetischen Aufwand in effizienter Weise in der Behandlung und Aufbereitung von Flüssigkeiten eingesetzt werden kann.

Diese Aufgabe wird durch die in den Ansprüchen gekennzeichneten Gegenstände gelöst.

Insbesondere wird eine Brennstoffzelle zur Filtration von Fluiden, insbesondere von Flüssigkeiten (nachfolgend auch "filtrationsaktive Brennstoffzelle" genannt) bereitgestellt, umfassend eine filtrationsaktive, elektrisch leitende Membranschicht, die gleichzeitig die Anode der Brennstoffzelle darstellt, eine Kathode, welche vorzugsweise eine luftatmende Kathode ist, einen fluiddurchlässigen Separator, der die Kathode räumlich und elektrisch von der Anode trennt, und eine aktive Spezies, die befähigt ist, im Feed befindliche Stoffe, welche als Energieträger dienen, zu oxidieren und die dabei freiwerdenden Elektronen an die Anode zu übertragen. Dabei wird gemäß der vorliegenden Erfindung unter dem Begriff "filtrationsaktive Brennstoffzelle" verstanden, dass mindestens die Anode und der Separator der erfindungsgemäßen Brennstoffzelle für Fluide, insbesondere für Flüssigkeiten, durchlässig sind.

Gemäß der vorliegenden Erfindung kann die filtrationsaktive Brennstoffzelle ähnlich einer konventionellen Brennstoffzelle ausgestaltet sein, die als galvanische Zelle die chemische Reaktionsenergie eines kontinuierlich zugeführten Brennstoffes, meist in Form von Wasserstoff oder vergleichbarer Verbindungen wie beispielsweise Ameisensäure oder Methanol, und eines Oxidationsmittels in elektrische Energie umwandelt. Dabei kann gemäß der vorliegenden Erfindung der filtrationsaktiven Brennstoffzelle auch beispielsweise zusätzlich elektrische Energie zugeführt werden, wodurch die erfindungsgemäße Brennstoffzelle im Sinne einer Elektrolysezelle zur Erzeugung beispielsweise von Wasserstoff betrieben werden kann.

Gemäß einer bevorzugten Ausführungsform handelt es sich bei der erfindungsgemäßen filtrationsaktiven Brennstoffzelle um eine Biobrennstoffzelle. Dabei wird unter dem Begriff "Biobrennstoffzelle" ein System verstanden, bei welchem im Feed befindliche Stoffe, wie beispielsweise aus biologischen Systemen stammende Substanzen und Derivaten davon, oxidiert werden und somit als Energieträger dienen. Gemäß der vorliegenden Erfindung zählen zu diesen Energieträgern insbesondere kohlenstoffhaltige Verbindungen, welche auch als organische Verbindungen bezeichnet werden können.

Die aktive Spezies ist erfindungsgemäß in der Lage im Feed befindliche Stoffe zu oxidieren. Dabei dienen diese Stoffe als Energieträger. In Abhängigkeit von der jeweiligen Aktivierungsenergie, die nötig ist, um diese Stoffe zu oxidieren, kann die aktive Spezies auch als Katalysator bezeichnet werden. Wenn folglich die Aktivierungsenergie des Elektronenübergangs gering genug ist, muss gemäß der vorliegenden Erfindung die aktive Spezies im Grunde keine katalytische Aktivität aufweisen.

Vorzugsweise umfasst die erfindungsgemäße filtrationsaktive Brennstoffzelle eine katalytisch aktive Spezies, die befähigt ist, im Feed befindliche Stoffe, welche als Energieträger dienen, zu oxidieren und die dabei freiwerdenden Elektronen an die Anode zu übertragen.

Weitere bevorzugte Ausführungsformen der vorliegenden Erfindung werden nachfolgend anhand begleitender Figuren beispielhaft beschrieben. Es zeigt
- Figur 1:: eine schematische Darstellung der Membranfiltration im Cross-Flow-Verfahren
- Figur 2:: eine schematische Darstellung der Abwasserreinigung kombiniert mit der Stromerzeugung in einer mikrobiellen Biobrennstoffzelle
- Figur 3:: eine schematische Darstellung einer bevorzugten Ausführungsform der erfindungsgemäßen filtrationsaktiven Brennstoffzelle
- Figur 4:: eine schematische Darstellung einer bevorzugten Ausführungsform der erfindungsgemäßen filtrationsaktiven Brennstoffzelle
- Figur 5:: eine schematische Darstellung einer bevorzugten Ausführungsform der erfindungsgemäßen filtrationsaktiven Brennstoffzelle
- Figur 6:: Stromdichten unterschiedlicher Filtermaterialien bei 0 V vs. NHE im Halbzellenversuch (Triplikate mit Standardabweichung, bzw. Duplikate bei 0,1 µm Porosität)
- Figur 7:: ein Fließbild zum Ausführungsbeispiel, wobei die elektrischen Anschlüsse der als Halbzelle betriebenen Anode aus Gründen der Übersichtlichkeit nicht dargestellt sind.

Wie vorstehend beschrieben, umfasst gemäß einer bevorzugten Ausführungsform der vorliegenden Erfindung die erfindungsgemäße filtrationsaktive Brennstoffzelle eine katalytisch aktive Spezies, die im Feed befindliche Stoffe an der Anode oxidiert, welche somit als Energieträger dienen. Gemäß der vorliegenden Erfindung können als katalytisch aktive Spezies neben Mikroorganismen oder Enzyme als Katalysatoren auch anorganische Katalysatoren eingesetzt werden. Bei der Verwendung von Mikroorganismen, wie beispielsweise Bakterien, als katalytisch aktive Spezies, kann die erfindungsgemäße Brennstoffzelle auch als mikrobielle Brennstoffzelle bezeichnet werden. Vorzugsweise werden dabei beispielsweise exoelektrogene Bakterien in Form eines Biofilms auf der filtrationsaktiven Membranschicht abgelagert. Exoelektrogene Bakterien setzen an der Anode kohlenstoffhaltige organische Verbindungen durch ihren Stoffwechsel zu CO₂ um. Die dabei frei werdenden Elektronen werden auf die Anode übertragen und fließen unter Freisetzung elektrischer Energie durch einen äußeren Laststromkreis zur Kathode.

Gemäß der vorliegenden Erfindung können grundsätzlich im Stand der Technik bekannte exoelektrogene Bakterien verwendet werden. Als Beispiele können Bakterien des Genus *Shewanella* oder des Genus *Geobactergenannt* werden.

Gemäß einer weiteren Ausführungsform der vorliegenden Erfindung müssen die Mikroorganismen, wie beispielsweise exoelektrogenen Bakterien, jedoch nicht in Form eines Biofilms auf der filtrationsaktiven Membranschicht abgelagert sein. Es ist auch möglich, dass spezielle Mikroorganismen, vorzugsweise Bakterien, eingesetzt werden, die eine "indirekte Elektronenübertragung" ermöglichen. Bei der indirekten Elektronenübertragung werden von diesen speziellen Mikroorganismen Mediatoren sekretiert, die die Rolle eines "Redox-shuttles" übernehmen. Die Mikroorganismen reduzieren diese am Ende ihrer Atmungskette, der Mediator diffundiert oder konvergiert zur Anode, gibt dort die Elektronen ab und kann anschließend von den Mikroorganismen erneut reduziert werden. Bei Verwendung endogener Mediatoren muss der Mikroorganismus somit nicht direkt auf der Anode haften. Als nicht limitierendes Beispiel solcher spezieller Mikroorganismen, die eine indirekte Elektronenübertragung aufgrund sekretierter Mediatoren ermöglichen und somit nicht auf der Anode haften müssen, kann beispielsweise das Bakterium *Pseudomonas aeruginosa* genannt werden, welches Pyocyanin als Mediator herstellt. Es ist ebenfalls bekannt, dass das Bakterium *Shewanella Oneidensis* Flavine sekretiert, die als Mediator zum Elektronenübertrag dienen (vgl. Marsili, E. et al. "Shewanella secretes flavins that mediate extracellular electron transfer" Proc. Natl. Acad. Sci. U. S. A. 105 (2008) 3968-3973).

Die Vorteile der erfindungsgemäßen Brennstoffzelle werden auch bei Verwendung von Enzymen als Katalysatoren erzielt. Erfindungsgemäß können immobilisierte Enzyme, freie Enzyme oder Enzym-Mediator Systeme an der Anode als Katalysatoren dienen. Durch das Einbringen von Enzym-sekretierenden Pilzen, Hefen oder Bakterien in die erfindungsgemäße Brennstoffzelle, die in diesem Fall auch als enzymatische Brennstoffzelle bezeichnet werden kann, ist es möglich bei der Filtration Energie zu gewinnen, wodurch die Betriebskosten der Membranfiltration in der Behandlung und Aufbereitung von Flüssigkeiten auch hier vorteilhafterweise erniedrigt werden.

Wie bereits vorstehend für die Ausführungsform der mikrobiellen Brennstoffzelle beschrieben, ist es auch im Falle einer erfindungsgemäßen enzymatischen Brennstoffzelle bei Verwendung freier Enzyme oder von Enzym-Mediator Systemen möglich, elektrische Energie durch Abbau organischer Substanzen an der Anode, die hier ebenfalls als Elektronenakzeptor dient, zu erzeugen, ohne dass ein Biofilm auf der Anode ausgebildet sein muss.

Gemäß der vorliegenden Erfindung ist es zudem möglich, anorganische Katalysatoren als katalytisch aktive Spezies zu verwenden. Gemäß dieser Ausführungsform der vorliegenden Erfindung werden, wie auch bei den konventionellen Wasserstoff-Brennstoffzellen, abiotische Katalysatoren verwendet, die an der Anode der erfindungsgemäßen Brennstoffzelle angeordnet sind. Vorzugsweise wird das Anodenmaterial mit Edelmetallen, wie beispielsweise Platin oder Palladium, oder Aktivkohle beschichtet. Diese abiotischen Katalysatoren ermöglichen die Elektrooxidation von im Feed befindlichen oxidierbaren Stoffen. Vorzugsweise werden gemäß dieser Ausführungsform als Energieträger aus biologischen Systemen stammende Substanzen und Derivate davon oxidiert. Diese Energieträger können auch als Biobrennstoffe bezeichnet werden.

Zudem ist es möglich, dass unter Verwendung abiotischer Katalysatoren im Feed enthaltende Störprodukte gezielt abreagiert werden können, wodurch neben der Erzeugung elektrischer Energie gleichzeitig diese in gewünschte (End-)Produkte umgesetzt werden können. Als Beispiel kann die Aufbereitung von trinkbaren Flüssigkeiten, insbesondere von alkoholhaltigen als auch alkoholfreien Getränken, genannt werden. Vorzugsweise werden Fruchtsäfte, insbesondere Apfelsäfte, aufbereitet, die durch die Membranfiltration einerseits geklärt werden und gleichzeitig mit Hilfe eines spezifischen auf der Anode abgeschiedenen abiotischen Katalysators von ungewünschten Stoffen befreit werden. Beispielsweise können im Falle eines Apfelsaftes die ungewollten Phenole und/oder Polyphenole, die für die Braunfärbung des Apfelsaftes verantwortlich sind, oxidiert werden. Dadurch ist es überraschenderweise möglich, neben der eigentlichen Trennfunktion, im Feed enthaltende Störprodukte gezielt abzubauen und gleichzeitig elektrischen Strom zu erzeugen.

Abiotische Katalysatoren zeichnen sich dadurch aus, dass sie im wesentlichen langzeitstabil und tolerant gegenüber extremen Betriebsbedingungen, wie beispielsweise extremem pH-Wert oder hohen Temperaturen, sind.

Gemäß einer bevorzugten Ausführungsform der erfindungsgemäßen filtrationsaktiven Brennstoffzelle werden abiotische Katalysatoren in Kombination mit einer mikrobiellen oder enzymatischen Brennstoffzelle verwendet.

Als Trennprinzip kann die erfindungsgemäße filtrationsaktive Brennstoffzelle sowohl als Cross-Flow- als auch als Dead-End-Prinzip ausgestaltet sein. Wenn die filtrationsaktive Brennstoffzelle in der Dead-End-Filtration eingesetzt wird, ermöglicht dies ein höheres Energiegewinnungspotential, da im Vergleich zum Cross-Flow-Verfahren die erforderliche Pumpleistung geringer ist.

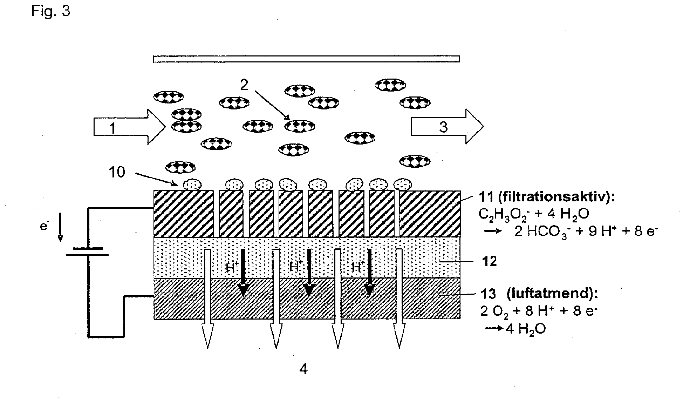

In einer bevorzugten Ausführungsform der vorliegenden Erfindung liegt die Anode der erfindungsgemäßen filtrationsaktiven Brennstoffzelle in Form einer im Cross-Flow betriebenen Membran vor. Dieses Prinzip ist in Figur 3 dargestellt, wobei als aktive Spezies beispielhaft exoelektrogene Bakterien gezeigt werden. Figur 3 zeigt eine schematische Darstellung einer bevorzugten Ausführungsform der erfindungsgemäßen Brennstoffzelle, bei der die filtrationsaktive Schicht gleichzeitig als Anode einer mikrobiellen Brennstoffzelle verwendet wird. Der Permeatfluss transportiert die an der Anode gebildeten Wasserstoffionen (H⁺-Ionen) zur Kathode und wirkt somit dem Aufbau eines pH-Gradienten entgegen. Darüber hinaus wird vorteilhafterweise die Ablagerung von Salzverkrustungen an der Kathodenstruktur verhindert.

Anhand dieser in Figur 3 gezeigten Darstellung kann der Unterschied zwischen dem erfindungsgemäßen Prinzip, bei dem die Anode der Brennstoffzelle gleichzeitig als Filtrationsmembran verwendet wird, und der im Stand der Technik bekannten Betriebsbedingung, bei der die Kathode als filtrationsaktive Schicht verwendet wird, deutlich erklärt werden. Im Vergleich zum Stand der Technik, dient gemäß der vorliegenden Erfindung die Anode der Brennstoffzelle gleichzeitig als Filtrationsmembran, d.h. die Anode ist aufgrund ihrer porösen Struktur filtrationsaktiv. Die aktive Spezies erzeugt durch die Wechselwirkung mit im Feed befindlichen Stoffen Elektronen, die auf die Anode übertragen werden. Unter Freisetzung elektrischer Energie fließen diese über einen äußeren Laststromkreis zur Kathode.

Daher bestehen an die Anode und Kathode in der erfindungsgemäßen Brennstoffzelle folgende Anforderungen:
- an der Anode wird eine aktive Spezies benötigt, die in Abhängigkeit von der jeweiligen Aktivierungsenergie des Elektronenübertrags in Form mikrobieller, enzymatischer und/oder abiotischer Katalysatoren ausgestaltet sein kann;
- an der Anode darf vorzugsweise im Wesentlichen kein Sauerstoff zur Verfügung stehen, da sonst die aktive Spezies die Elektronen auf diesen übertragen würden und nicht auf die Elektrode;
- an der Kathode muss ein Oxidationsmittel zur Verfügung stehen, welches dort reduziert wird.

Aufgrund dieser Anforderungen haben die im Stand der Technik beschriebenen Konfigurationen, bei welchen die Kathode als filtrationsaktive Schicht verwendet wird, im Vergleich zur Anode immer den Nachteil, dass der Schlamm von der Anode, wo die Bakterien oder Enzyme als Katalysator benötigt werden, zur Kathode überführt werden muss, wo sie dann abfiltriert werden. Dadurch ist eine direkte Aneinanderreihung der Anode/Isolator/Kathode wie in der vorliegenden Erfindung nicht, oder zumindest nur schwer realisierbar. Vielmehr müsste die Anode und die Kathode räumlich getrennt sein, aber dennoch mit demselben Abwasser/Schlamm beschickt werden. Dies bedeutet jedoch einen höheren apparativen und energetischen Aufwand. Mit der räumlichen Trennung steigt zudem auch der innere elektrische Widerstand über den Elektrolyten der Brennstoffzelle, was eine geringere Leistungsfähigkeit zur Folge hat. Dies ist vor allem bei Elektrolyten mit niedriger Leitfähigkeit, wie häufig in Abwässern, von großer Bedeutung.

Wie in Figur 3 dargestellt ist, wird durch die kontinuierliche Überströmung der filtrationsaktiven Schicht senkrecht zum Permeatfluss eine Verblockung der Poren vermieden. Dies ermöglicht im Gegensatz zu der Dead-End-Filtration, dass der Permeatfluss nahezu unverändert aufrechterhalten werden kann, da eine kontinuierliche Ausbildung eines Filterkuchens vermieden werden kann.

Für den Fall, dass die aktive Spezies in Form eines an der Anode ausgebildeten Biofilms vorliegt, kann durch den Cross-Flow darüber hinaus ein optimaler Betriebspunkt zwischen Biofilmabtrag und Biofilmbildung eingestellt werden.

Die Bauweise und das Material der filtrationsaktiven, elektrisch leitenden Membranschicht, die gleichzeitig die Anode der erfindungsgemäßen Brennstoffzelle darstellt, sind nicht besonders beschränkt. Wesentlich ist nur, dass sich das Anodenmaterial zur Filtration eignet, d.h. porös ist, und elektrisch leitend ist. Dies kann erfindungsgemäß in Form eines porösen und elektrisch leitenden Materials oder in Form einer hybriden Konstruktion, bei der sich poröse (filtrationsaktive) Bereiche und elektrisch leitfähige Bereiche abwechseln, verwirklicht werden.

Dabei eignen sich in Abhängigkeit des gewünschten Rückhaltevermögens verschiedene Materialien sowie Konstruktionen für die Anode der erfindungsgemäßen Brennstoffzelle. Im Bereich der Mikrofiltration (MF) und der Ultrafiltration (UF) ist das Filtrationsmaterial vorzugsweise aus einem leitfähigen Polymerwerkstoff, wie beispielsweise dotierte Polymerwerkstoffe auf Basis von Polysulfon, Polyethersulfon, Polypropylen, Polyvinylidenfluorid, Polyacrylnitril oder Polypyrrol. Ebenso bevorzugt werden anorganische Werkstoffe als Anodenmaterial eingesetzt. Besonders geeignete Materialien stellen Kohlenstoff, beispielsweise Graphit, Aktivkohle oder Carbon-Nanofasern, Keramiken, beispielsweise TiO₂, oder Metalle dar. In einer besonders bevorzugten Ausführungsform umfasst die Anode eine TiO₂-Keramik oder eine poröse Sintermetallstruktur aus Titan oder (Edel-)Stahl.

Als geeignete Bauform kann die Anode in der erfindungsgemäßen filtrationsaktiven Brennstoffzelle als poröser Körper, in Form einer Gitter- und netzartigen Struktur oder als Vlies vorliegen.

Um die Leitfähigkeit der erfindungsgemäßen filtrationsaktiven Brennstoffzelle gegebenenfalls zu erhöhen, falls die Leitfähigkeit des Anodenmaterials nicht ausreichen sollte, können ferner Stromsammler mit elektrischem Kontakt zur Anode eingebracht werden. Vorteilhafterweise werden diese Stromsammler aus nicht korrodierbaren Materialien ausgewählt, wodurch der Stromfluss der erfindungsgemäßen Brennstoffzelle über einen langen Zeitraum erhöht werden kann. Vorzugsweise sind diese nicht korrodierbaren Materialien aus Kohlenstoffmaterialien, insbesondere Graphit, Chromlegierungen oder aus ferritischen Eisenlegierungen ausgewählt.

Gemäß einer bevorzugten Ausführungsform der erfindungsgemäßen Brennstoffzelle ist die filtrationsaktive Anode in Form einer Nano-, Ultra- oder Mikrofiltrationsmembran, besonders bevorzugt in Form einer Ultrafiltrationsmembran ausgestaltet.

Darüber hinaus kann die filtrationsaktive Anode eine hybride Konstruktion aufweisen, bei der sich filtrationsaktive Bereiche, insbesondere in Form der vorstehend genannten Filtrationsmembranen, und elektrisch leitfähige Bereiche abwechseln. Diese Konstruktion der filtrationsaktiven Anode erlaubt vorteilhafter Weise, dass konventionelle Membranen, welche nicht zwingend elektrisch leitfähig sind, verwendet werden können. Gemäß dieser Ausführungsform können im Stand der Technik bekannte Materialien für die filtrationsaktiven Bereiche verwendet werden. Beispielsweise können als nicht einschränkende Materialien Filtrationsmembranen auf Basis der vorstehend genannten Polymere (undotiert), insbesondere auf Basis von Polysulfon, Polyethersulfon, Polypropylen, Polyvinylidenfluorid, Polyacrylnitril oder Polypyrrol, genannt werden. Weiterhin können beispielsweise Filtrationsmembranen auf Cellulose-Basis, wie z.B. Celluloseester, Celluloseacetat, Cellulosenitrat oder regenerierte Cellulose, oder nichtleitfähige Keramiken genannt werden.

Die elektrisch leitfähigen Bereiche, welche vorzugsweise mindestens 5%, mehr bevorzugt mindestens 10% und besonders bevorzugt mindestens 15% der Gesamtfläche, d.h. der geometrischen Fläche, der Anodenkonstruktion betragen, können ihrerseits ebenfalls in Form eines porösen Körpers, in Form einer Gitter- und netzartigen Struktur oder als Vlies vorliegen. Diese erfindungsgemäße Ausführungsform erlaubt, dass die elektrisch leitfähigen Bereiche, welche aus konventionellen Materialien bestehen können, nicht zwingend filtrationsaktiv sein müssen. In diesem Fall liegt der Anteil der elektrisch leitfähigen Bereiche in Bezug auf die Gesamtfläche der Anodenkonstruktion vorzugsweise bei 50% oder weniger, mehr bevorzugt bei 40% oder weniger und besonders bevorzugt bei 30% oder weniger.

Ist die Anode wie vorstehend beschrieben als hybride Konstruktion ausgeführt, können die filtrationsaktiven, nicht elektrisch leitenden Bereiche gleichzeitig als Separator dienen. Dazu muss erfindungsgemäß die elektrisch nicht leitende Schicht auch unter den leitfähigen Bereichen fortgeführt werden. Damit übernimmt diese Schicht automatisch die elektrische Isolation zwischen Anode und Kathode und es kann auf einen zusätzlichen Separator verzichtet werden. Wie oben beschrieben können im Stand der Technik bekannte Materialien für diese filtrationsaktiven und elektrisch isolierenden Bereiche verwendet werden.

Beispielsweise können als nicht einschränkende Materialien Filtrationsmembranen auf Basis der vorstehend genannten Polymere sowie Filtrationsmembranen auf Cellulose-Basis, wie z.B. Celluloseester, Celluloseacetat, Cellulosenitrat oder regenerierte Cellulose, oder nichtleitfähige Keramiken genannt werden.

Wie vorstehend beschrieben, sollte an der Anode im Wesentlichen kein Sauerstoff zur Verfügung stehen, da sonst die aktive Spezies die Elektronen auf diesen übertragen würden und nicht auf die Elektrode. Weiterhin sind einige geeignete exoelektrogene Bakterien wie *Geobacter metallireducens* strikt anaerob. Gemäß der vorliegenden Erfindung ist in diesem Zusammenhang unter dem Begriff "im Wesentlichen" jedoch nicht zu verstehen, dass im Anodenkompartiment kein Sauerstoff vorhanden sein darf. Je nach Ausgestaltung der erfindungsgemäßen filtrationsaktiven Brennstoffzelle kann der Sauerstoffgehalt im Anodenkompartiment größer oder kleiner sein. Bei der Verwendung fakultativ anaerober exoelektrogener Bakterien wie beispielsweise *Shewanella oneidensis* als aktive Spezies hat sich gezeigt, dass ein geringer Sauerstoffgehalt im Anodenkompartiment einen positiven Einfluss auf das Wachstum der Bakterien hat, wodurch die elektrische Leistungsfähigkeit der erfindungsgemäßen Brennstoffzelle überraschenderweise verbessert wird. Vorzugsweise beträgt der Sauerstoffgehalt im Anodenkompartiment bei 20°C bis zu 8 mg/l, mehr bevorzugt bis zu 6 mg/l. Für die erfindungsgemäße Ausführungsform, bei welcher im Anodenkompartiment ein geringer Sauerstoffgehalt vorliegt, beträgt dieser besonders bevorzugt im Bereich von 2 bis 4 mg/l.

Weiterhin kann die erfindungsgemäße Brennstoffzelle in unterschiedliche Membranmodule eingesetzt werden. Dazu zählen, ohne darauf beschränkt zu sein, Rohrmodule, Plattenmodule, Wickelmodule, Hohlfasermodule und Kapillarmodule, wobei Hohlfasermodule oder Rohrmodule bevorzugt sind.

Der fluiddurchlässige Separator kann erfindungsgemäß beispielsweise in Form einer Isolatorschicht, wie beispielsweise einer semipermeablen Isolatorschicht, ausgebildet sein, der die Kathode räumlich und elektrisch von der Anode trennt und für Ionen, insbesondere Protonen durchlässig ist. D.h. der Separator in Form einer Isolatorschicht muss elektrisch isolierend, porös und benetzbar sein. Nicht zwingend erforderlich ist, dass das Separatormaterial ionenleitend oder gasdicht ist. Dadurch wird es ermöglicht, dass die an der Anode gebildeten H⁺-Ionen durch den Permeatfluss zur Kathode transportiert werden, wodurch ein Aufbau eines pH-Gradienten verhindert werden kann. Unter dem Begriff "fluiddurchlässig" wird gemäß der vorliegenden Erfindung verstanden, dass der Separator in Form einer Isolatorschicht porös ist, d.h. die Isolatorschicht ist durchlässig für Flüssigkeiten und Gase.

Erfindungsgemäß können vorzugsweise im Stand der Technik bekannte Materialien für diese Isolatorschicht verwendet werden. Diese im Allgemeinen als Protonen-Austausch-Membran bezeichneten Separatoren sind für Protonen durchlässig, während der Transport von Gasen, wie beispielsweise Sauerstoff oder Wasserstoff, verhindert wird. Beispielsweise kann der Separator der erfindungsgemäßen filtrationsaktiven Brennstoffzelle entweder aus reinen Polymer- oder aus Kompositmembranen hergestellt sein, bei denen andere Materialien in eine Polymermatrix eingebettet werden. Zudem können auch nano- und mikroporöse Al₂O₃-Keramiken als Separatorschicht verwendet werden.

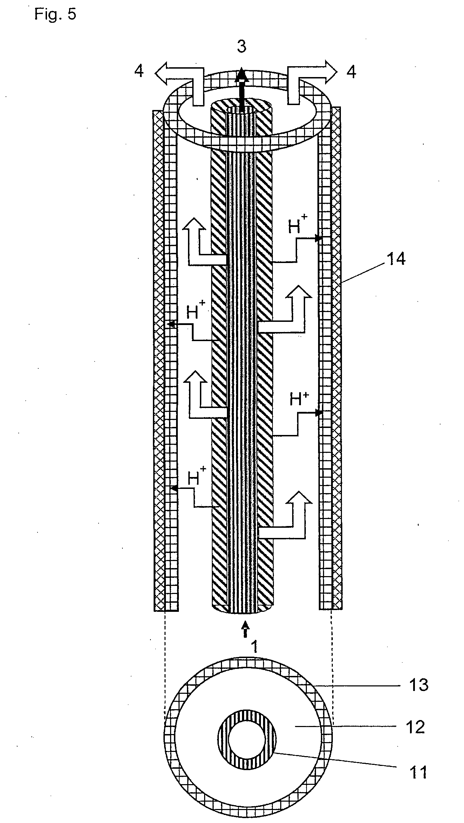

Gemäß einer weiteren bevorzugten Ausführungsform der vorliegenden Erfindung ist der Separator derart ausgestaltet, dass dieser vom Permeat der Anode durchströmt wird (nachfolgend auch "permeatdurchströmter Separator" genannt). Vorzugsweise liegt der permeatdurchströmte Separator als Hohlraum vor, der die Kathode räumlich und elektrisch von der Anode trennt, wie dies schematisch in Figur 5 dargestellt ist. Bei dieser Ausführungsform der erfindungsgemäßen filtrationsaktiven Brennstoffzelle wird der Permeatfluss vorzugsweise derart umgelenkt, dass dieser nach Durchdringen der Anode im Falle einer im Cross-Flow betriebenen Membran wieder in Richtung der Hauptströmrichtung des Feeds ausgerichtet ist, d.h. eine Umlenkung um ca. 90° erfährt. Entsprechendes gilt für den Fall, dass die filtrationsaktive Brennstoffzelle in Form einer im Dead-End betriebenen Membran vorliegt.

Vorzugsweise weist die Kathode gemäß dieser Ausführungsform auf der Anode abgewandten Oberfläche eine hydrophobe Membran auf, welche für Sauerstoff durchlässig ist. Dadurch ist es möglich, dass die Kathode steril gehalten und eine gegebenenfalls schädliche Biofilmbildung vermieden werden kann.

Wie auch die Anode der erfindungsgemäßen Brennstoffzelle unterliegt das Kathodenmaterial keiner besonderen Beschränkung. Vorzugsweise ist die Kathode aus einem elektrisch leitfähigen Polymerwerkstoff oder einem anorganischen Werkstoff, wie vorstehend für die Anode beschrieben, hergestellt. Zu den anorganischen Werkstoffen zählen als besonders geeignete Materialien Kohlenstoffe, wie beispielsweise Graphit, Aktivkohle oder Carbon-Nanofasern, Keramiken, beispielsweise TiO₂, oder Metalle. In einer besonders bevorzugten Ausführungsform umfasst die Kathode Aktivkohle.

Gemäß einer bevorzugten Ausführungsform der vorliegenden Erfindung ist die Kathode luftatmend. Dabei wird gemäß der vorliegenden Erfindung unter dem Begriff "luftatmend" verstanden, dass die Kathode mit Luftsauerstoff aus der Gasphase in Kontakt steht. Andererseits kann die erfindungsgemäße filtrationsaktive Brennstoffzelle auch eine "eingetauchte" Kathode umfassen, an welcher je nach Anwendung entsprechende Stoffe zu gewünschten Produkten reduziert werden.

Dabei ist unter dem Begriff "eingetauchte" Kathode zu verstehen, dass die Kathode nicht nur mit Luftsauerstoff aus der Gasphase in Kontakt steht, sondern auch mit Luftsauerstoff, der aus der Gasphase in die Flüssigphase eingeblasen wird oder in diese diffundiert. Weiterhin werden unter dem Begriff "eingetauchte" Kathoden teilweise oder vollständig von einer entsprechenden Flüssigkeit umgebene Kathoden verstanden, wobei die Flüssigkeit ein anderes Oxidationsmittel, wie beispielsweise Nitratverbindungen, enthält, welches anstelle des Luftsauerstoffs reduziert wird.

Wie bereits vorstehend beschrieben, kann durch Zuführen von elektrischer Energie die erfindungsgemäße filtrationsaktive Brennstoffzelle auch als Elektrolysezelle verwendet werden, wodurch an der Kathode gezielt Produkte erzeugt werden können. Vorzugsweise kann die erfindungsgemäße filtrationsaktive Brennstoffzelle zur Erzeugung von beispielsweise Natronlauge, Wasserstoffperoxid, Ethanol und besonders bevorzugt von Wasserstoff eingesetzt werden.

Wie bereits vorstehend beschrieben, stellt sich bei bekannten Technologien häufig das Problem, dass die im Abwasser gelösten Salze zu einer Bildung von Salzablagerungen auf der Kathode führen, die die Transportwege und Reaktionsoberfläche der Kathode blockieren und so zu einem raschen Leistungsverlust führen.

Gemäß der vorliegenden Erfindung wird dieses Problem durch die Konstruktion der erfindungsgemäßen filtrationsaktiven Brennstoffzelle umgangen, da aufgrund des Permeatflusses die Ausbildung von Salzablagerungen unterdrückt werden kann.

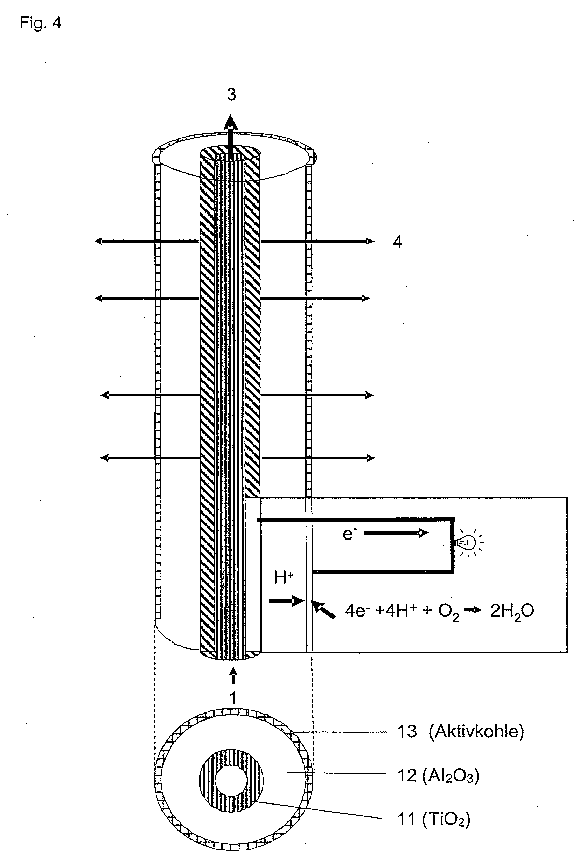

Besonders bevorzugte Ausführungsformen der vorliegenden Erfindung sind in den Figuren 4 und 5 dargestellt. Gemäß dieser bevorzugten Ausführungsformen der erfindungsgemäßen filtrationsaktiven Brennstoffzelle umfasst die filtrationsaktive, elektrisch leitende Membranschicht, die gleichzeitig die Anode der Brennstoffzelle darstellt, TiO₂, welche in Form einer Hohlfasermembran bereitgestellt ist. Gemäß einer weiteren besonders bevorzugten Ausführungsform kann die Anode der erfindungsgemäßen Brennstoffzelle poröse Sintermetallstrukturen aus Titan oder (Edel-)Stahl umfassen. Auf dieser Anode ist ein exoelektrogener Biofilm angeordnet, der durch den bakteriellen Stoffwechsel bedingt Elektronen an die Anode abgibt.

Ferner umfasst die in Figur 4 dargestellte bevorzugte Ausführungsform der erfindungsgemäßen filtrationsaktiven Brennstoffzelle einen eine Al₂O₃-Keramik umfassenden Separator, der die Anode von der Kathode trennt. Die Kathode ist in Form einer Aktivkohle enthaltenden Ummantelung des Separators ausgestaltet. Ebenso bevorzugt kann der Separator in Form poröser Polymere ausgestaltet sein.

Wie vorstehend beschrieben, kann der Separator auch als permeatdurchströmter Separator vorliegen, der die Kathode räumlich und elektrisch von der Anode trennt. Bei dieser geänderten Kathodenkonfiguration besteht die Möglichkeit eine konventionelle luftatmende Kathode mit hydrophober Membran zu integrieren. Darüber hinaus können bei dieser Ausführungsform zur Stabilisierung der Anoden-Kathoden-Anordnung zusätzliche unterstützende Strukturen, beispielsweise in Form von Gitterstrukturen, enthalten sein.

Gemäß der vorliegenden Erfindung kann die erfindungsgemäße filtrationsaktive Brennstoffzelle nach einem Verfahren, umfassend die folgenden Schritte, hergestellt werden:
- Bereitstellen einer filtrationsaktiven, elektrisch leitenden Membranschicht als Anode,
- Bereitstellen einer Kathode,
- Bereitstellen eines fluiddurchlässigen Separators, der die Kathode räumlich und elektrisch von der Anode trennt, und
- Bereitstellen einer aktiven Spezies an der Anode, die befähigt ist, im Feed befindliche Stoffe, welche als Energieträger dienen, zu oxidieren und die dabei freiwerdenden Elektronen an die Anode zu übertragen.

Darüber hinaus stellt die vorliegende Erfindung ein Verfahren zur Behandlung und Aufbereitung von Fluiden, insbesondere von Flüssigkeiten, bereit, wobei die vorstehend beschriebene erfindungsgemäße filtrationsaktive Brennstoffzelle verwendet wird. Dabei werden gemäß der vorliegenden Erfindung unter dem Begriff "Fluiden" sowohl Gase und Flüssigkeiten verstanden, wobei unter dem Begriff "Flüssigkeiten" sämtliche Fluide verstanden werden, die vorzugsweise bei Temperaturen von weniger als 100°C und Atmosphärendruck in flüssiger Form vorliegen. Insbesondere handelt es sich gemäß der vorliegenden Erfindung sowohl um organische und/oder wässrige Flüssigkeiten als auch ionische Flüssigkeiten.

Gemäß der vorliegenden Erfindung wird die erfindungsgemäße filtrationsaktive Brennstoffzelle vorzugsweise zur Aufbereitung von Abwasser, besonders bevorzugt von Abwasser in Kläranlagen eingesetzt.

Darüber hinaus wird die erfindungsgemäße filtrationsaktive Brennstoffzelle in einer bevorzugten Ausführungsform zur Reinigung industrieller Abwässer verwendet, insbesondere zur Behandlung von Abwässern der Pharma- und Lebensmittelindustrie.

Ferner wird die erfindungsgemäße filtrationsaktive Brennstoffzelle vorzugsweise zur Behandlung und Aufbereitung von trinkbaren Flüssigkeiten verwendet. Gemäß der vorliegenden Erfindung umfassen trinkbare Flüssigkeiten sowohl alkoholhaltige als auch alkoholfreie Flüssigkeiten, wobei vorzugsweise als alkoholfreie Flüssigkeiten Fruchtsäfte, insbesondere Apfelsäfte, behandelt werden.

Durch Zuführen elektrischer Energie kann die erfindungsgemäße filtrationsaktive Brennstoffzelle zudem zur Erzeugung von beispielsweise Natronlauge, Wasserstoffperoxid, Ethanol und besonders bevorzugt von Wasserstoff eingesetzt werden.

Überraschender- und vorteilhafterweise ermöglicht die erfindungsgemäße filtrationsaktive Brennstoffzelle, bei der die filtrationsaktive Schicht eines Membranfilters gleichzeitig als Anode einer Brennstoffzelle genutzt wird, dass die Energieeffizienz des Membranverfahrens erhöht und die Betriebskosten gesenkt werden, sodass die Membranfiltration in einem breiteren Einsatzbereich wirtschaftlich wird. Gemäß der vorliegenden Erfindung lässt sich im Vergleich zum Stand der Technik, welcher die Kopplung von Membranfiltration und mikrobieller Brennstoffzellen durch Reihenschaltung vorschlägt, aufgrund der Ausgestaltung der Anode einer Brennstoffzelle in Form einer filtrationsaktiven Schicht, die Kombination einer Membranfiltration mit einer Brennstoffzelle zur Energiegewinnung in einer gemeinsamen Struktur realisieren. Die erfindungsgemäße filtrationsaktive Brennstoffzelle zeichnet sich daher durch einen geringeren apparativen Aufwand aus, wodurch vorteilhafterweise der Energiebedarf, insbesondere in Form von Pumpenenergie, sowie der räumliche Bedarf und Investitionskosten gespart werden können.

Im Vergleich zu bekannten Systemen, bei welchen die Kathode einer mikrobiellen Brennstoffzelle zu Filtrationszwecken genutzt wird, zeichnet sich die erfindungsgemäße filtrationsaktive Brennstoffzelle insbesondere dadurch aus, dass bekannte Probleme wie das Versalzen der Kathode und das Auftreten eines pH-Gradienten zwischen Anode und Kathode überraschenderweise vermieden werden, wodurch die Funktion sowie die elektrische Leistung der Brennstoffzelle deutlich verbessert werden. Weiterhin lässt sich durch die Nutzung der Anode im Gegensatz zur Kathode als filtrationsaktives Element die direkte Aneinanderreihung von Anode, Separator, Kathode realisieren. Dies führt durch den geringeren elektrischen Widerstand zu einer erhöhten Leistung der Brennstoffzelle sowie zu einem geringeren apparativen Aufwand.

Darüber hinaus ermöglicht die Kombination beider Technologien, d.h. die Membranfiltration und Brennstoffzelle, in einer einzigen funktionalen und integralen Struktur den Energiebedarf der Membranfiltrationsanlage zu verringern, da im Feed befindliche Stoffe als Energieträger aufgrund der Oxidation direkt in elektrische Energie umgewandelt werden. Dadurch können die Betriebskosten der Membranfiltration in der Behandlung und Aufbereitung von Fluiden, insbesondere von Flüssigkeiten, deutlich gesenkt werden und darauf aufbauende wie beispielsweise wassersparende Produktionsprozesse werden in einem größeren Rahmen wirtschaftlich realisierbar.

### Beispiele:

Die vorliegende Erfindung wird nachfolgend anhand von nicht einschränkenden Beispielen näher erläutert.

### Qualifizierung von porösen Filtermaterialien als Anode

Zunächst wurden gesinterte poröse Edelstahl- und Titanfilter als Anoden in einem Halbzellenaufbau ohne Filtration charakterisiert. Es wurden Edelstahlfilter mit den Porengrößen 1 µm, 0,5 µm, 0,3 µm und 0,1 µm sowie Titanfilter der Porengrößen 1 µm und 0,5 µm getestet. Als Medium wurde ein acetathaltiger Carbonatpuffer verwendet. Als exoelektrogene Bakterien, und damit als Katalysator, wurde *Geobacter sulfurreducens* eingesetzt.

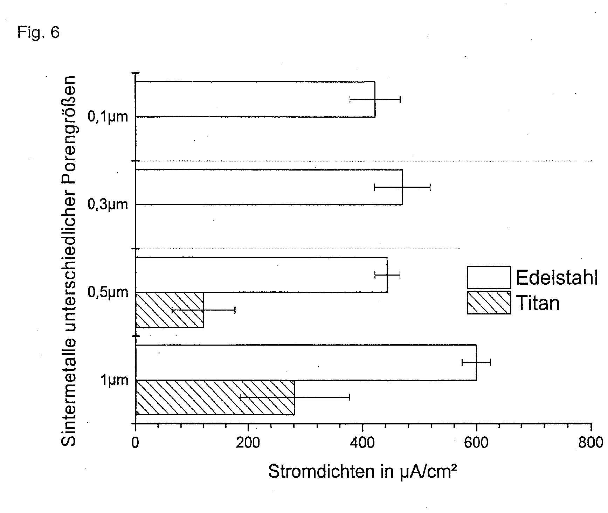

Die höchste Stromdichte wurde mit Edelstahlfiltern der Porengröße 1 µm erzielt. Mit 600 µA/cm² bei 0 V vs. NHE (Normalwasserstoffelektrode) (vgl. Figur 6) liegt der erreichte Wert im selben Bereich wie Aktivkohlegestrick (C-Tex13; ca. 700 µA/cm² bei -89 mV vs. NHE), welches als leistungsfähiges Anodenmaterial gilt. Titan zeigt im Vergleich zu den Edelstahlfiltern eine etwas geringere Stromdichte.

### Halbzellenversuche unter Cross-Flow-Bedingungen

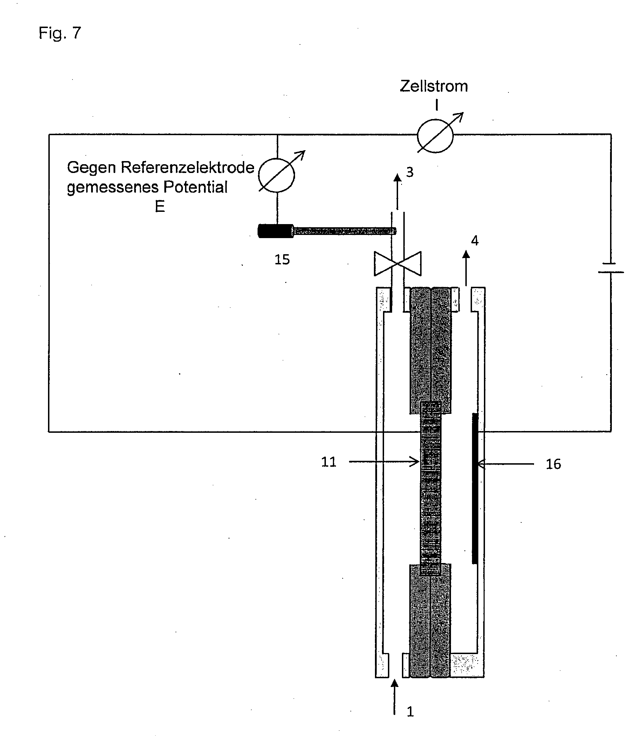

Für eine Cross-Flow-Filtrationsanlage der Fa. Sartorius Stedim Biotech GmbH, SARTOFLOW® Study, mit der sowohl elektrochemische als auch filtrationsrelevante Messungen durchgeführt werden können, wurde ein angepasster Membranhalter konstruiert, der den Einbau der beschriebenen Sintermetalle sowie einen 3-Elektroden-Aufbau mit Gegenelektrode und Referenzelektrode erlaubt. Ein entsprechender Versuchsaufbau ist schematisch in Figur 7 dargestellt.

Hierzu wurde eine Filtermembran aus Sintermetall (Edelstahl mit der Nenn-Porengröße 0,5 µm) als filtrationsaktive Anode mit 10 cm² geometrischer Fläche als Halbzelle mit synthetischem Abwasser betrieben. Das synthetische Abwasser enthielt Acetat als Kohlenstoffquelle in einem neutralen Carbonatpuffer und wurde in einem 5 L Reaktorgefäß unter anaeroben Bedingungen vorgehalten. Als aktive Spezies wurde das elektroaktive Bakterium *Geobacter sulfurreducens* verwendet.

Bei einer Überströmgeschwindigkeit von 0,5 m/s und einem Transmembrandruck (TMP) von 1 bar wurde nach 2 Betriebstagen ein Permeatfluss von 26 l/m²h erreicht, während sich die Stromdichte an der Anode zu 9 A/m² bei 0 V vs. NHE im Halbzellenbetrieb einstellte. Nach einer 2-tägigen Betriebsphase mit variierendem TMP wurde mit demselben Ausführungsbeispiel bei 1 bar TMP und einer Überströmgeschwindigkeit von 0,5 m/s ein dem zunehmenden Fouling entsprechend reduzierter Permeatfluss von 13 l/m²h erreicht, wobei sich die Stromdichte bei 0 V vs. NHE auf 14 A/m² erhöhte.

### Bezugszeichenliste

- 1: Feed
- 2: Partikel / Bakterien
- 3: Retentat
- 4: Filtrat / Permeat
- 5: Abwasser, enthält organische Kohlenstoffverbindungen
- 6: Gereinigtes Abwasser
- 7: Ionenleitende Membran
- 8: Anodenkompartiment
- 9: Kathodenkompartiment
- 10: Exoelektrogene Bakterien
- 11: Anode
- 12: Separator
- 13: Kathode
- 14: hydrophobe Membran
- 15: Referenzelektrode
- 16: Gegenelektrode

## Patentansprüche

1. Filtrationsaktive Brennstoffzelle zur Filtration von Fluiden, umfassend eine filtrationsaktive, elektrisch leitende Membranschicht (11), die gleichzeitig die Anode (11) der Brennstoffzelle darstellt, eine Kathode (13), einen fluiddurchlässigen Separator (12), der die Kathode (13) räumlich und elektrisch von der Anode (11) trennt, und eine aktive Spezies, die befähigt ist, im Feed befindliche Stoffe, welche als Energieträger dienen, zu oxidieren und die dabei freiwerdenden Elektronen an die Anode (11) zu übertragen.

2. Filtrationsaktive Brennstoffzelle nach Anspruch 1, wobei die aktive Spezies aus Mikroorganismen, Enzymen und/oder abiotischen Katalysatoren ausgewählt ist.

3. Filtrationsaktive Brennstoffzelle nach Anspruch 1 oder 2, die in Form einer mikrobiellen Brennstoffzelle oder einer enzymatischen Brennstoffzelle ausgebildet ist.

4. Filtrationsaktive Brennstoffzelle nach einem der Ansprüche 1 bis 3, wobei die aktive Spezies in Form eines auf der Anode (11) angeordneten Biofilms aus Mikroorganismen, vorzugsweise exoelektrogenen Bakterien (10), vorliegt.

5. Filtrationsaktive Brennstoffzelle nach einem der Ansprüche 1 bis 4, die in Form einer im Cross-Flow betriebenen Membran vorliegt.

6. Filtrationsaktive Brennstoffzelle nach einem der Ansprüche 1 bis 5, wobei die Anode (11) eine Ultrafiltrationsmembran ist.

7. Filtrationsaktive Brennstoffzelle nach einem der Ansprüche 1 bis 6, wobei die Anode (11) eine hybride Konstruktion aufweist, bei der sich filtrationsaktive Bereiche und elektrisch leitfähige Bereiche abwechseln.

8. Filtrationsaktive Brennstoffzelle nach einem der Ansprüche 1 bis 7, die als Hohlfasermodul oder Rohrmodul vorliegt.

9. Filtrationsaktive Brennstoffzelle nach einem der Ansprüche 1 bis 8, wobei die Anode (11) einen elektrisch leitfähigen Polymerwerkstoff, ausgewählt aus dotierten Polymerwerkstoffen auf Basis von Polysulfon, Polyethersulfon, Polypropylen, Polyvinylidenfluorid, Polyacrylnitril oder Polypyrrol, oder einen elektrisch leitfähigen anorganischen Werkstoff, ausgewählt aus Kohlenstoff, Keramiken und Metallen umfasst.

10. Filtrationsaktive Brennstoffzelle nach einem der Ansprüche 1 bis 9, wobei die Anode (11) eine TiO₂-Keramik oder eine poröse Sintermetallstruktur aus Titan oder (Edel-)Stahl umfasst.

11. Filtrationsaktive Brennstoffzelle nach einem der Ansprüche 1 bis 10, wobei die Kathode (13) einen elektrisch leitfähigen Polymerwerkstoff, ausgewählt aus dotierten Polymerwerkstoffen auf Basis von Polysulfon, Polyethersulfon, Polypropylen, Polyvinylidenfluorid, Polyacrylnitril oder Polypyrrol, oder einen elektrisch leitfähigen anorganischen Werkstoff, ausgewählt aus Kohlenstoff, Aktivkohle, Keramiken und Metallen, umfasst.

12. Filtrationsaktive Brennstoffzelle nach einem der Ansprüche 1 bis 11, wobei die Kathode (13) Aktivkohle umfasst.

13. Filtrationsaktive Brennstoffzelle nach einem der Ansprüche 1 bis 12, wobei die Kathode (13) auf der Anode (11) abgewandten Oberfläche eine hydrophobe Membran (14) aufweist, welche für Sauerstoff durchlässig ist.

14. Verwendung einer filtrationsaktiven Brennstoffzelle nach einem der Ansprüche 1 bis 13 zur Behandlung und Aufbereitung von Fluiden.

15. Verwendung einer filtrationsaktiven Brennstoffzelle nach einem der Ansprüche 1 bis 13 zur Behandlung und Aufbereitung von Abwasser oder von trinkbaren Flüssigkeiten.

## Claims

1. A filtration-active fuel cell for the filtration of fluids, comprising a filtration-active, electrically conductive membrane layer (11) which simultaneously represents the anode (11) of the fuel cell, a cathode (13), a fluid-permeable separator (12) which spatially and electrically separates the cathode (13) from the anode (11), and an active species which is capable of oxidizing materials being present in the feed which serve as energy carriers and transferring the thus liberated electrons to the anode (11).

2. The filtration-active fuel cell according to claim 1, wherein the active species is selected from microorganisms, enzymes and/or abiotic catalysts.

3. The filtration-active fuel cell according to claim 1 or 2, which is in the form of a microbial fuel cell or an enzymatic fuel cell.

4. The filtration-active fuel cell according to any one of claims 1 to 3, wherein the active species is present in the form of a biofilm composed of microorganisms, preferably exoelectrogenic bacteria (10), arranged on the anode (11).

5. The filtration-active fuel cell according to any one of claims 1 to 4, which is present in the form of a membrane operated in the cross-flow mode.

6. The filtration-active fuel cell according to any one of claims 1 to 5, wherein the anode (11) is an ultrafiltration membrane.

7. The filtration-active fuel cell according to any one of claims 1 to 6, wherein the anode (11) has a hybrid construction in which filtration-active regions and electrically conductive regions alternate.

8. The filtration-active fuel cell according to any one of claims 1 to 7, which is present as hollow fiber module or tubular module.

9. The filtration-active fuel cell according to any one of claims 1 to 8, wherein the anode (11) comprises an electrically conductive polymer material selected from doped polymer materials based on polysulfone, polyether sulfone, polypropylene, polyvinylidene fluoride, polyacrylonitrile or polypyrrole, or an electrically conductive inorganic material selected from carbon, ceramics and metals.

10. The filtration-active fuel cell according to any one of claims 1 to 9, wherein the anode (11) comprises a TiO₂ ceramic or a porous sintered metal structure composed of titanium or (stainless) steel.

11. The filtration-active fuel cell according to any one of claims 1 to 10, wherein the cathode (13) comprises an electrically conductive polymer material selected from doped polymer materials based on polysulfone, polyether sulfone, polypropylene, polyvinylidene fluoride, polyacrylonitrile or polypyrrole, or an electrically conductive inorganic material selected from carbon, activated carbon, ceramics and metals.

12. The filtration-active fuel cell according to any one of claims 1 to 11, wherein the cathode (13) comprises activated carbon.

13. The filtration-active fuel cell according to any one of claims 1 to 12, wherein the cathode (13) has a hydrophobic membrane (14) which is permeable to oxygen on the surface facing away from the anode (11).

14. The use of a filtration-active fuel cell according to any one of claims 1 to 13 for the treatment and processing of fluids.

15. The use of a filtration-active fuel cell according to any one of claims 1 to 13 for the treatment and processing of wastewater or drinkable liquids.

## Revendications

1. Pile à combustible à filtration active pour la filtration de fluides, comprenant une couche membrane à filtration active et conductrice de l'électricité (11) qui représente simultanément l'anode (11) de la pile à combustible, une cathode (13), un séparateur perméable aux fluides (12) qui sépare spatialement et électriquement la cathode (13) de l'anode (11) et une espèce active capable d'oxyder des matériaux présents dans l'apport qui servent de porteurs d'énergie et de transférer les électrons ainsi libérés à l'anode (11).

2. Pile à combustible à filtration active selon la revendication 1, dans laquelle l'espèce active est sélectionnée parmi les microorganismes, les enzymes et/ou les catalyseurs abiotiques.

3. Pile à combustible à filtration active selon la revendication 1 ou 2, qui est sous la forme d'une pile à combustible microbienne ou d'une pile à combustible enzymatique.

4. Pile à combustible à filtration active selon l'une quelconque des revendications 1 à 3, dans laquelle l'espèce active est présente sous forme d'un biofilm composé de microorganismes, de préférence de bactéries exoélectrogènes (10) disposées sur l'anode (11).

5. Pile à combustible à filtration active selon l'une quelconque des revendications 1 à 4, qui est présente sous la forme d'une membrane fonctionnant en mode à flux tangentiel.

6. Pile à combustible à filtration active selon l'une quelconque des revendications 1 à 5, dans laquelle l'anode (11) est une membrane à ultrafiltration.

7. Pile à combustible à filtration active selon l'une quelconque des revendications 1 à 6, dans laquelle l'anode (11) présente une construction hybride dans laquelle des zones à filtration active et des zones conductrices de l'électricité alternent.

8. Pile à combustible à filtration active selon l'une quelconque des revendications 1 à 7, qui est présente comme un module à fibres creuses ou un module tubulaire.

9. Pile à combustible à filtration active selon l'une quelconque des revendications 1 à 8, dans laquelle l'anode (11) comprend un matériau polymère conducteur de l'électricité sélectionné parmi les matériaux polymères dopés à base de polysulfone, de polyéther sulfone, de polypropylène, de fluorure de polyvinylidène, de polyacrylonitrile ou de polypyrrole, ou un matériau inorganique conducteur de l'électricité sélectionné parmi le carbone, les céramiques et les métaux.

10. Pile à combustible à filtration active selon l'une quelconque des revendications 1 à 9, dans laquelle l'anode (11) comprend une structure céramique de TiO₂ ou une structure de métal fritté poreux composé de titane ou d'acier (inoxydable).

11. Pile à combustible à filtration active selon l'une quelconque des revendications 1 à 10, dans laquelle la cathode (13) comprend un matériau polymère conducteur de l'électricité sélectionné parmi les matières polymères dopés à base de polysulfone, de polyéther sulfone, de polypropylène, de fluorure de polyvinylidène, de polyacrylonitrile ou de polypyrrole, ou un matériau inorganique conducteur de l'électricité sélectionné parmi le carbone, le charbon actif, les céramiques et les métaux.

12. Pile à combustible à filtration active selon l'une quelconque des revendications 1 à 11, dans laquelle la cathode (13) comprend du charbon actif.

13. Pile à combustible à filtration active selon l'une quelconque des revendications 1 à 12, dans laquelle la cathode (13) présente une membrane hydrophobe (14) perméable à l'oxygène sur surface opposée à l'anode (11).

14. Utilisation d'une pile à combustible à filtration active selon l'une quelconque des revendications 1 à 13 pour le traitement et la préparation de fluides.

15. Utilisation d'une pile à combustible à filtration active selon l'une quelconque des revendications 1 à 13 pour le traitement et la préparation d'eaux usées ou de liquides potables.
